# EUROPEAN PATENT APPLICATION

(11) **EP 1 936 484 A1**
(43) Date of publication of application: **25.06.2008**
(21) Application number: 06127146.6
(22) Date of filing: 22.12.2006
(51) Int. Cl.: G06F 3/048, G09G 5/14

(54) **Method for automatically associating different kinds of actions with movements of the mouse pointer in a computer program for organizing personal activities**

(71) Applicant: PRB S.r.l., 20135 Milano (IT)
(72) Inventor: Carbonera, Antonio, PAVIA, 27100 (IT); Forlani, Paolo, MILANO, 20135 (IT); Garavaglia, Roberto, BERNATE TICINO, 20010 (IT)
(74) Representative: Borsano, Corrado

(57) **Abstract**

The present invention provides for a method for automatically associating and executing different kinds of actions, corresponding to different kinds of computer programs or parts thereof to be executed, in a computer program for organizing personal activities, characterized by providing the following steps:
- dividing a computer screen in a number of sub-windows, each sub-window including a list of elements of personal organization programs in the form of a certain number of object types;
- creating a correspondence table, containing predefined values creating a number of correspondences between said object types which can be the origin and/or the destination of dragging operations;
- providing for dragging elements shown in one or more of said sub-windows over other elements in the same or other windows, with movements of a mouse pointer or an organiser stylus or the like;
- automatically executing said actions deriving from said correspondence selected by the said dragging.

## Description

### DESCRIPTION

The present invention relates to a method for automatically associating different kinds of actions, corresponding to different kinds of programs or parts thereof to be executed, with movements of the mouse pointer in a computer program for organizing personal activities.

In the informatics field, several "personal and business organization" programs are known and available. These programs draw a window, on the screen of a computer or of a palm organizer, in which there are lists of actions to be performed, for example the calendar with the daily commitments, the contacts with addresses and phone numbers, the lists of incoming and outgoing messages and any other items useful for daily activity.

By selecting one of the items with a mouse click or double click, or with the pressure of the stylus on the screen, the activity linked to the element is started, for example: the visualization of a message, the visualization of the window with the details of a contact, the preparation of a message to be sent and so on.

Existing programs, to perform an elementary action such as the posting of a message, the input of a memo or the opening of an electronic spreadsheet, need to perform several operations in sequence one after the other; in each of said operations it is necessary to start programs, key in data or make selections in given windows with different aspect and size.

The inexperienced user feels often confused and needs a long training to perform those operations, as well as this complication is a waste of time and concentration even for an expert user. Therefore a problem arises in terms of difficult and time consuming user interfacing procedures.

Another technical problem arising therefrom is the considerable waste of computer time and resources, in terms of number of program instructions or routines to be performed.

Therefore the purpose of the present invention is to solve the aforementioned problems, and to provide a method for automatically associating different kinds of actions, corresponding to different kinds of programs or parts thereof to be executed, with movements of the mouse pointer in a computer program for organizing personal activities, which is much quicker than the known programs, in terms of number of program instructions or routines to be performed.

The basic idea of the present invention consists in exploiting the "click and drag" actions allowed by a computer mouse or by an organiser stylus, to perform different kinds of previously determined and complex actions corresponding to different kinds of computer programs.

In a program created according to the method subject of the invention, by dragging elements shown in the windows of a personal organization program over other elements in the same or other windows, complex actions predefined for that particular drag are automatically executed, in terms of different kinds of programs or parts thereof.

It is also possible, as an option, to associate different actions to the same drag, according to the type of click (single or double) and to the mouse key pressed (right or left), greatly increasing the flexibility of actions.

This way the expert user saves a great number of actions and possible errors, and the inexperienced one must learn many less details and must cross a much smaller number of windows to execute given sequences of actions.

It is a particular subject of the present invention a method for automatically associating and executing different kinds of actions, corresponding to different kinds of computer programs or parts thereof to be executed, in a computer program for organizing personal activities,
characterized by providing the following steps:
- dividing a computer screen in a number of sub-windows, each sub-window including a list of elements of personal organization programs in the form of a certain number of object types;
- creating a correspondence table, containing predefined values creating a number of correspondences between said object types which can be the origin and/or the destination of dragging operations;
- providing for dragging elements shown in one or more of said sub-windows over other elements in one or more of other sub-windows, with movements of a mouse pointer or an organiser stylus or the like;
- automatically executing said actions deriving from said correspondence selected by the said dragging.

These and further objects are achieved by means of an apparatus and method as described in the attached claims, which are considered an integral part of the present description.

The invention will become fully clear from the following detailed description, given by way of a mere exemplifying and non limiting example, to be read with reference to the attached drawing figures, wherein:
- Figure 1 shows an example of a screen window divided in a number of sub-windows including different object types according to the method subject of the invention;
- Figures 2.1 and 2.2 show flow-charts of an example of sequence of actions performed respectively with a known method and with the method according to the invention;
- Figure 3 shows another format of the flow-chart of figure 2.2.

The basic idea of the present invention consists in exploiting the "click and drag" actions allowed by a computer mouse or by an organiser stylus, to perform different kinds of previously determined and complex actions corresponding to different kinds of computer programs.
For example the following actions are possible:
First example:
   - Dragging an activity over a contact, the activity is automatically connected to the contact, that becomes its correspondent.
   - Dragging the activity over a text editor program, the editor starts with an already opened document, where the address fields are already filled with the data of the correspondent connected with the activity.
Second example:
   - Dragging a contact over a spreadsheet program, the spreadsheet program is automatically started with an already opened document, where fields are already filled with the data of the correspondent connected with the activity.
Third example:
   - Dragging an activity over the contact of a colleague, the commitment of a meeting with the colleague is generated, and it appears in the agenda of both users.
The method provides for an initial step called "Configuration step".
In this initial step a table of associations or correspondences is created describing the programmed actions to be performed by the program.

For doing so, an analysis is performed on the practical daily work of the organization that wants to use it. The result is a written document, for example in the form of a word processor table, describing the actions of the program in a human readable form.

The following table 1 shows an example of the written document in the form of a word processor table, in which:
- in the left column there is a list of kinds of starting actions corresponding to places on the screen where it is possible to click with the mouse;
- in the central column there is a corresponding list of target activities to be performed corresponding to places on the screen where it is possible to drag with the mouse the activity clicked on the left column;
- in the right column there is a corresponding list of effects created by the click-and-drag action.

The contents of the boxes in table 1 is self-esplanatory.

| **Click on** | **Drag to** | **Effect** |
|---|---|---|
| Activity to be done | Activity of the day | Insert the activity in the day, with the suggested duration. It can also be dragged out. |
| Activity to be done | Start time | Insert the activity in the time schedule of the day. It can also be dragged out. |
| Activity to be done | Business dossier | Create a connection to the dossier. It can also be dragged out. |
| Activity to be done | Correspondent | Connect activity to the correspondent. |
| Activity to be done | Colleague | Generate a meeting commitment with the colleague. |
| Activity to be done | Double click without dragging | Show the details of the activity; they can be modified |
| Contact | Telephone call | Call the contact by phone. |
| Contact | Search | Start the search for data regarding the contact in all fields specified in the following screen. |
| Contact | Double click without dragging | Show the details of the contact; they can be modified |
| Business dossier | Double click without dragging | Create and open a Word document with a header including the main elements of the business dossier and the date. |
| Document | Double click without dragging | Open the document, and it can be modified. When closed, archive it with collected indexes. |

The written document is then converted into a computer readable table, in database format or any other suitable format. It is a sort of correspondence table, containing factory predefined values creating the correspondence between object types which can be the origin and the destination of the dragging operations. The correspondence table can be updated or modified by technical people, while the normal user has no access to it.

The following table 2 shows an example of the correspondence table for programmed actions.

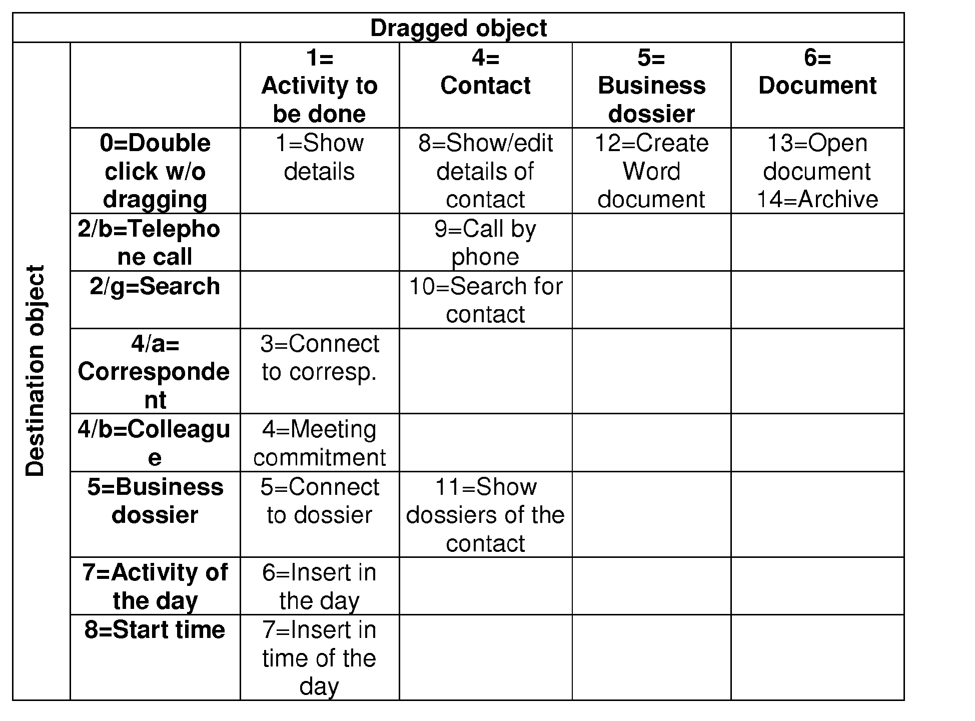

The table has a number of rows and columns equal to the number of draggable items in the screen. At each row/column crossing, an action or list of actions is specified by inserting its/their action ordinal number(s). When the user drags an object, the program uses the dragged object ordinal as a column and the destination object as a row: at the crossing of the column with the row, the program finds the ordinal number of the action or list of actions and executes them by starting an execution procedure. Where no action is specified in a box, this means that no action has to be performed for that correspondence between a row and a column.

The contents of the boxes in table 2 is self-esplanatory.

The method then provides for a step called "Usage step".

A first part of this step comprises a part of the program of a type known per se, and which can be implemented in any known way, providing for dividing the screen in a number of windows.

Each window in the screen includes a list of elements of personal organization programs in the form of a certain number of object types that can be the origin or the destination of a dragging operation.

Tipically different windows include different types of objects.

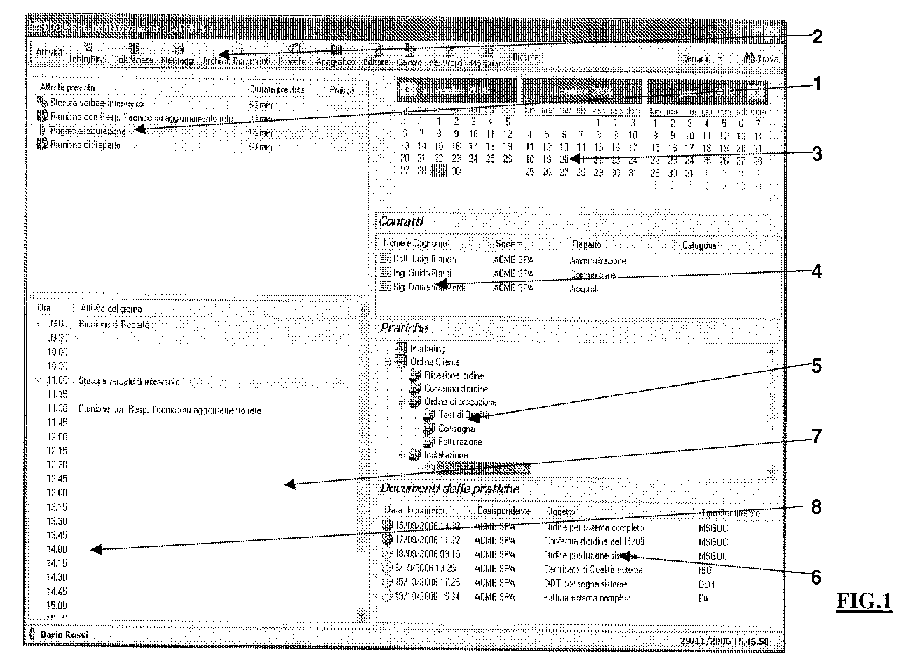

An example is shown in figure 1, where a screen is divided in a number of windows. Each window is labelled with an ordinal number identifying the following types of objects:
1 = Activities to be done;
2 = Function buttons;
3 = Calendar;
4 = Contacts (Correspondents, Colleagues);
5 = Business Dossiers;
6 = Documents in business dossiers;
7 = Activities of the day;
8 = Start time.

A second part of this step comprises a part of the program providing for dragging elements shown in the sub-windows of a personal organization program over other elements in the same or other windows, so as complex actions predefined for that particular drag are automatically executed, for example the actions shown in table 2.

The system can perform a certain number of operations and each operation has an ordinal number (i.e. show details=1, connect to correspondent=3, call by phone=9....).

In addition, to allow complex actions, such as "send a mail to a contact", the execution procedure also receives pointers to the origin and destination objects of the drag. The pointers allow the execution procedure to retrieve, from the data base of the system, some data, needed for the operation, that are not available just by the drag action performed. For instance, if the action is "Call by phone", the execution procedure receives a pointer to the database record where the data of the correspondent to be called are stored. The execution procedure reads the phone number of the correspondent from this record and uses the number to dial it.

As another instance, if the user drags a contact over an editor, the execution procedure reads the address of the origin contact from the database record addressed by the pointer received, starts the editor program and, by using the editor interface functions, inserts the address in its position in the text.

The flow charts of drawing 2 show an example for better explaining the operation of the method in more complex situations and the advantages of the new technique.

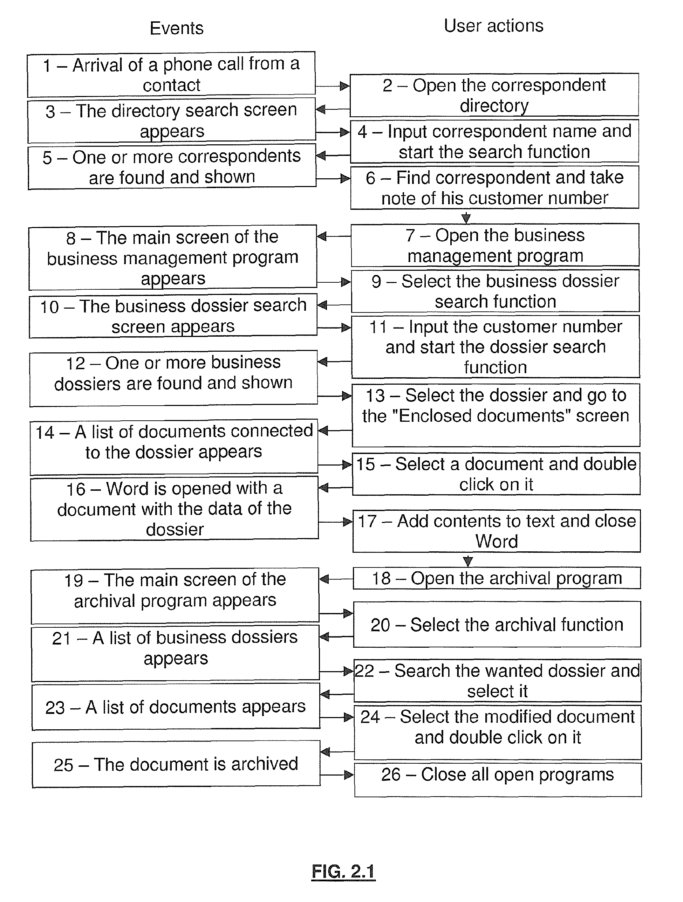

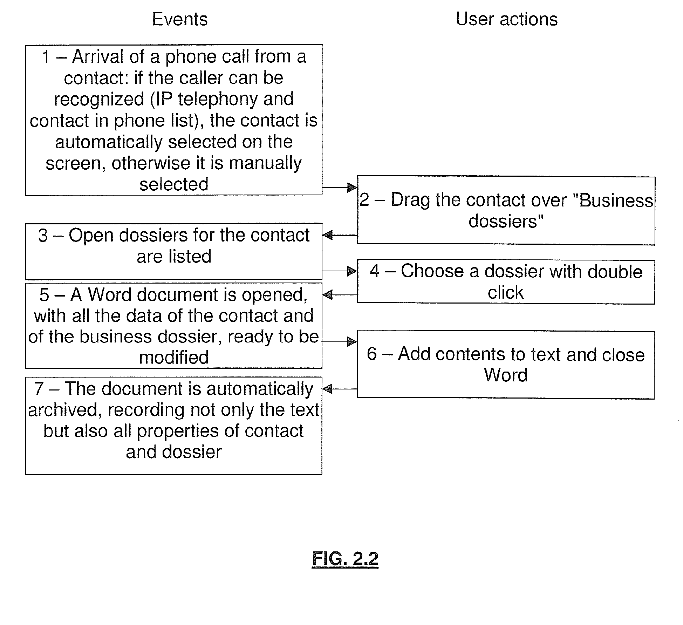

On the part 1 of the drawing (figure 2.1), the operation flow in a typical known information system is shown, while, on the part 2 (figure 2.2), the same flow with the new method is shown.

The definitions of the actions written in the boxes in figure 2 is self-esplanatory and is considered an integral part of the present description.

It can be easily seen that a considerable save in number of steps and computer time is achieved.

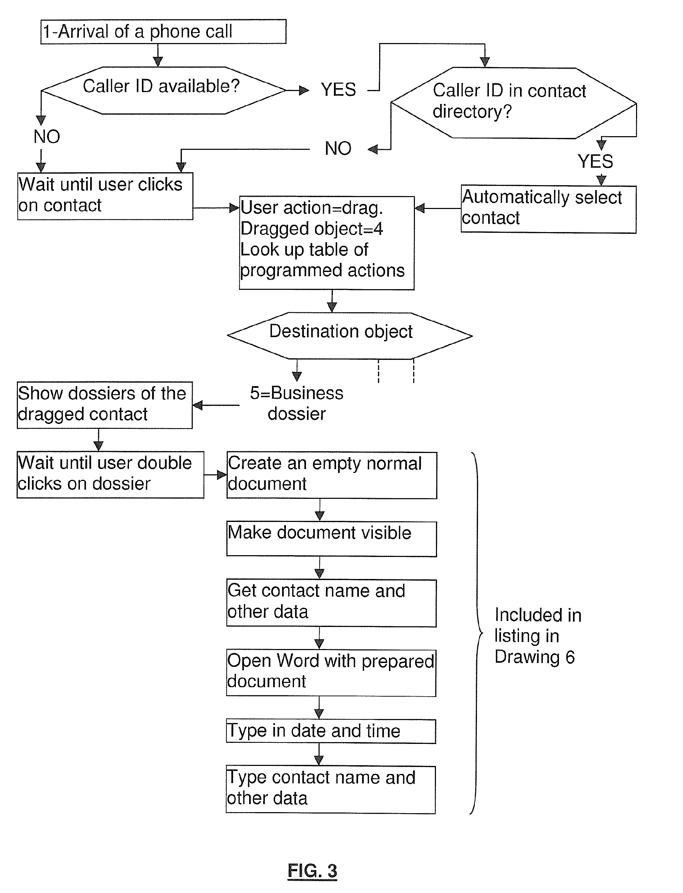

Figure 3 shows another format for the flow-chart of figure 2.2, where a more detailed description of the flow of the program is given. While figure 2.2 describes the operation from the point of view of the user, figure 3 describes the same operation from the point of view of the programmer who has to write the real instructions in a computer language.

As an example for the computer program implementation of the method subject of the invention, in the following the listing is given of the piece of code that, in a typical implementation of a C language program that carries out the method, performs the most important part of the overall work: the opening of a Word document with all data already filled in. This part corresponds to the boxes braced in figure 3.

### namespace DDD.NET

```
 {
  public partial class Agenda : Form
  {
     private bool isDragging = false;
     public Agenda()
     {
        I nitializeComponent();
     }
     private void IvActivity_ItemDrag(object sender, ItemDragEventArgs e)
     {
       ListView lV = (ListView)sender;
       lV. DoDragDrop(lV.Selectedltems.Count, DragDropEffects.Copy);
     }
     private void IvContacts_DragEnter(object sender, DragEventArgs e)
     {
       isDragging = true;
       e.Effect = DragDropEffects.Copy;
     }
     private void IvContacts_DragDrop(object sender, DragEventArgs e)
     {
       // required by .NET framework for optional COM values
       object missing = System.Reflection.Missing.Value;
       object fileName = "normal.dot"; // template file name
       object newTemplate = false; // not a new template
       object docType = 0; // docType doesn't matter
       // after the document is opened, show it!
       object is Visible = true;
       ListView IvTmp = (ListView)sender;
        Point hitPoint = IvContacts.PointToClient(new Point(e.X, e.Y));
       isDragging = false;
       // Create a new Document, by calling the Add function
       // in the Documents collection
       Word.Application wa = new Word.Application();
       Word. Document doc = wa.Documents.Add(ref fileName, ref newTemplate,
          ref docType, ref isVisible);
       wa.Visible = true;
       doc.Activate();
       wa.Selection.TypeText(System.DateTime.Now.ToString0);
       wa.Selection.TypeText("\r\n");
       wa.Selection.TypeText(IvContacts.GetItemAt(hitPoint.X, hitPoint.Y).Text);
     }
     private void IvContacts_MouseMove(object sender, MouseEventArgs e)
     {
       if (isDragging)
       {
          ListViewltem li;
          li = IvContacts.GetltemAt(e.X, e.Y);
          if (li != null)
             li.Selected = true;
       }
     }
  }
 }
```

Further implementation details will not be described, as the man skilled in the art is able to carry out the invention starting from the teaching of the above description.

The present invention can be advantageously implemented through a program for computer comprising program coding means for the implementation of one or more steps of the method, when this program is running on a computer. Therefore, it is understood that the scope of protection is extended to such a program for computer and in addition to a computer readable means having a recorded message therein, said computer readable means comprising program coding means for the implementation of one or more steps of the method, when this program is run on a computer.

Although the invention has been described in detail for the purpose of illustration only, it is understood that such detail is solely for that purpose and that many variations, changes, additions and substitutions can be made therein by those of ordinary skill in the art without departing from the spirit and scope of the invention.

## Claims

1. Method for automatically associating and executing different kinds of actions, corresponding to different kinds of computer programs or parts thereof to be executed, in a computer program for organizing personal activities,
**characterized by** providing the following steps:
- dividing a computer screen in a number of sub-windows, each sub-window including a list of elements of personal organization programs in the form of a certain number of object types;
- creating a correspondence table, containing predefined values creating a number of correspondences between said object types which can be the origin and/or the destination of dragging operations;
- providing for dragging elements shown in one or more of said sub-windows over other elements in the same or other windows, with movements of a mouse pointer or an organiser stylus or the like;
- automatically executing said actions deriving from said correspondence selected by the said dragging.

2. Method according to claim 1, **characterized in that** said step of creating a correspondence table comprises:
- formatting the table with a number of rows and columns equal to the number of draggable items in the screen;
- specifying at each row/column crossing an action or list of actions by inserting its/their action ordinal number(s);
- when dragging an object, using the dragged object ordinal as a column and the destination object as a row;
- at the crossing of the column with the row, finding the ordinal number of the action or list of actions to be performed.

3. Method according to claim 2, **characterized in that** where no action is specified in a box, no action has to be performed for that correspondence between a row and a column.

4. Method according to claim 2, **characterized in that** It comprises associating different actions to the same drag, according to the type of click (single or double) and to the mouse key pressed (right or left).

5. Method according to claim 1, **characterized in that** before said step of creating a correspondence table, a step is provided for performing an analysis on the practical daily work and creating a written document describing the actions of the program in a human readable form; said written document being organized as a table in which:
- in a left column there is a list of kinds of starting actions corresponding to places on the screen where it is possible to click with the mouse;
- in a central column there is a corresponding list of target activities to be performed corresponding to places on the screen where it is possible to drag with the mouse the activity clicked on the left column;
- in a right column there is a corresponding list of effects created by the click-and-drag action;
said written document being converted into said correspondence table.

6. Method according to any of the preceding claims, **characterized in that** it comprises receiving pointers to the origin and destination objects of the drag, and according to the type of action, reading the relevant fields and using also them to perform the action.

7. Computer program comprising computer program code means adapted to perform all the steps of claims 1 to 6, when said program is run on a computer.

8. A computer readable medium having a program recorded thereon, said computer readable medium comprising computer program code means adapted to perform all the steps of claims 1 to 6, when said program is run on a computer.
